## Europäisches Patentamt
## European Patent Office
## Office européen des brevets

(19)

(11) Numéro de publication: **0 096 601**
**B1**

(12)

# FASCICULE DE BREVET EUROPEEN

(45) Date de publication du fascicule du brevet:
28.01.87

(51) Int. Cl.⁴: **H 02 H 3/02,** H 01 H 71/00,
H 02 J 3/14

(21) Numéro de dépôt: **83400932.6**

(22) Date de dépôt: **09.05.83**

(54) **Bloc fonctionnel de distribution terminale basse tension.**

(30) Priorité: **17.05.82 FR 8208750
09.08.82 FR 8213958
20.12.82 FR 8221514**

(43) Date de publication de la demande:
**21.12.83 Bulletin 83/51**

(45) Mention de la délivrance du brevet:
**28.01.87 Bulletin 87/5**

(84) Etats contractants désignés:
**BE CH DE GB IT LI NL SE**

(56) Documents cités:
**EP - A - 0 042 113
CH - A - 230 577
DE - A - 2 328 004
DE - A - 3 111 255
FR - A - 1 593 245
FR - A - 2 147 841
FR - A - 2 480 031
US - A - 4 216 384**

(73) Titulaire: **MERLIN GERIN, Rue Henri Tarze,
F-38050 Grenoble Cedex (FR)**

(72) Inventeur: **Charbonneau, Michel, Merlin Gerin,
F-38050 Grenoble Cedex (FR)**
Inventeur: **Dieppedalle, François, Merlin Gerin,
F-38050 Grenoble Cedex (FR)**
Inventeur: **Megret, Michel, Merlin Gerin,
F-380505 Grenoble Cedex (FR)**
Inventeur: **Terracol Claude, Merlin Gerin,
F-38050 Grenoble Cedex (FR)**

(74) Mandataire: **Kern, Paul et al, Merlin Gerin Sce.
Brevets 20, rue Henri Tarze, F-38050 Grenoble Cedex
(FR)**

ACTORUM AG

## Description

L'invention est relative à une installation électrique selon le préambule de la revendication 1.

Une installation électrique connue (FR-A-2 147 841) du type modulaire comporte, à chaque étage, des disjoncteurs remplissant les fonctions usuelles de protection contre les surcharges et les courts-circuits et assurant éventuellement une sélectivité de déclenchement. Le principal inconvénient d'une telle installation est son coût souvent disproportionné par rapport aux avantages fournis.

La présente invention part de la constatation que dans les installations de distribution domestique ou terminale, la protection contre les courts-circuits peut être commune à plusieurs départs, à condition de respecter certaines règles et à constituer un bloc fonctionnel en usine incorporant les éléments constitutifs.

Le but de l'invention est de réaliser une installation moins coûteuse et d'un montage plus simple et ce but est atteint par la mise en œuvre des caractéristiques de la revendication 1.

L'appareil divisionnaire comporte une commande d'ouverture et de fermeture pour isoler ou alimenter le départ associé et un déclencheur assurant la protection thermique de l'appareil et du câble de départ connecté en aval. La fonction de déclenchement sur court-circuit est, par contre, supprimée et reportée sur l'appareil général. Ce report implique le respect de certaines règles de coordination, en l'occurence:

— les appareils divisionnaires doivent avoir une tenue électrodynamique des contacts suffisante pour éviter toute répulsion lors d'un court-circuit coupé par l'appareil général. Cette tenue électrodynamique doit donc être au moins égale au plus grand courant de crête limité par l'appareil général lorsqu'il coupe le courant de court-circuit présumé de l'installation,

— la limite maximale d'auto-protection du déclencheur surcharges équipant un appareil divisionnaire doit être supérieure au seuil d'intervention du déclencheur instantané de l'appareil général. Ainsi, avant que l'appareil divisionnaire cesse de se protéger lui-même, il commence à être protégé par l'étage supérieur,

— tout appareil divisionnaire, et en particulier son déclencheur surcharges, doit pouvoir supporter l'intégrale de Joule correspondant à la coupure par l'appareil général. Il en est de même pour le câble alimenté par l'appareil divisionnaire. Le seuil de déclenchement instantané de l'appareil général doit être maintenu à un niveau suffisant pour éviter des déclenchements injustifiés.

La coupure d'un court-circuit est prise en charge par l'appareil général et le pouvoir de coupure des appareils divisionnaires peut être faible. Leur chambre de coupure peut être supprimée ou tout au moins être notablement réduite, ce qui contribue, avec la suppression du déclencheur magnétique, à une simplification et à une réduction du coût de fabrication.

Dans une installation à usage domestique, un premier mode de réalisation de l'invention consiste à utiliser comme appareil général le disjoncteur de branchement placé en tête de l'installation, dans le mesure où les appareils divisionnaires satisfont aux règles de coordination avec cet appareil, telles qu'elles ont été énoncées plus haut.

Les caractéristiques du disjoncteur de branchement satisfont en effet à des règles spécifiques et ne peuvent pas être modifiées pour les besoins de l'invention, un examen précis de ces caractéristiques montre toutefois qu'elles ne sont pas incompatibles avec la protection des appareils divisionnaires et des câbles alimentés par ces derniers, mais qu'elles introduisent simplement certaines contraintes dans leur conception.

Dans un deuxième mode de réalisation, on peut envisager de limiter ces contraintes en ne s'en remettant plus au disjoncteur de branchement pour l'élimination des courts-circuits, mais en plaçant en série avec celui-ci un appareil supplémentaire particulièrement étudié en vue d'assurer la coordination avec les appareils divisionnaires. Cet appareil serait, en particulier, dépourvu de protection surcharges.

Par contre, il devrait être plus performant que les disjoncteurs de branchement en ce qui concerne la protection contre les courts-circuits, c'est-à-dire:

— présenter un pouvoir de limitation supérieur,

— être équipé d'un déclencheur instantané à seuil plus bas, la limite pouvant être admise pour ce seuil correspondant, par exemple à la somme des calibres de tous les appareils divisionnaires.

Le coût d'introduction de cet appareil supplémentaire serait contrebalancé par les économies réalisées sur tous les appareils divisionnaires, ces derniers ayant alors des contraintes allégées dans le domaine de la tenue électrodynamique et de la tenue thermique sur court-circuit.

Selon l'invention, l'appareil général et les appareils divisionnaires sont réunis dans un même bloc fonctionnel, ainsi que les liaisons électriques entre eux.

Le travail de l'installateur se résume alors au branchement des conducteurs d'alimentation du bloc et des conducteurs de départ.

Sur un plan de la sécurité des interventions en aval, il est bon que les appareils divisionnaires répondent aux règles de sectionnement et notamment que la position de l'organe de commande traduise de façon fiable la position des contacts.

Dans le même esprit, l'appareil général incorporé dans le bloc fonctionnel peut être avantageusement doté d'un pôle additionnel de coupure du neutre.

Les appareils divisionnaires sont, soit unipolaires, soit multipolaires, notamment tripolaires, avec ou sans coupure du neutre, ce dernier n'étant pas protégé.

L'appareil général est unipolaire ou multipolaire, par exemple tripolaire, avec ou sans coupure du neutre.

Le document DE-A-2 328 004 décrit en référence aux figures 3 et 3A un bloc constitué par l'assemblage de deux boîtiers, dont l'un contient un disjoncteur standard et l'autre des contacts à ouverture rapide sur court-circuit, connectés en série du disjoncteur pour accroître le pouvoir de coupure. Ce bloc ne comporte pas une pluralité de départs et le disjoncteur est équipé d'un déclencheur thermique et magnétique.

Le document FR-A-2 480 031 est relatif à un disjecteur limiteur alimentant plusieurs départs, chacun protégé par un disjoncteur. Dans cette installation du type modulaire, le déclenchement du disjoncteur limiteur est retardé pour assurer une sélectivité.

L'invention a également pour but de réaliser une installation fiable et simple de gestion automatique de la distribution d'électricité, applicable à la plupart des installations terminales ou domestiques pour un coût réduit.

Il est de plus en plus nécessaire d'économiser l'énergie électrique en prévoyant en plus des fonctions de protection des fonctions supplémentaires de commande spécifique susceptibles d'automatiser la distribution de l'électricité. Ces fonctions supplémentaires consistent à assurer la mise en marche et l'arrêt de certains récepteurs alimentés par les différents départs, notamment des appareils d'éclairage, de chauffage ou de moteurs en fonction des périodes horaires ou hebdomadaires, de l'éclairement naturel, de la température ou d'autres facteurs ou paramètres.

Le document DE-A-3 111 255 concerne un poste de transformation alimentant plusieurs câbles de distribution avec un disjoncteur principal et des interrupteurs associés à chacun des câbles. Lors d'un court-circuit, le disjecteur s'ouvre temporairement et un microprocesseur pilote l'ouverture de l'interrupteur correspondant après avoir localisé le défaut. Cette installation est conçue pour de forts courant de plusieurs centaines d'ampères et ne comporte pas un bloc fonctionnel de distribution terminale alimentant des départs de quelques dizaines d'ampères.

Selon un développement de l'invention, l'appareil général est doté d'un déclencheur électromagnétique à action instantanée, et une unité de traitement électronique centralise les informations en provenance de capteurs de courant placés sur les départs et d'organes de commande extérieurs pour délivrer après traitement un ordre d'intervention à un relais de commande de l'appareil divisionnaire. Cet ordre est soit un signal de déclenchement après apparition d'un défaut détecté par le capteur correspondant, soit un signal de commande à distance piloté par les organes extérieurs pour l'ouverture ou la fermeture dudit départ. L'ensemble est agencé pour assurer une coordination entre les fonctions de protection et de commande, la protection contre les courts-circuits étant assurée par le seul appareil général, les protections complémentaires contre surcharges, courant différentiel résiduel et autres étant pris en compte par les appareil divisionnaires commandés à la fois par les circuits électroniques internes et les organes de commande extérieurs.

Un microprocesseur est avantageusement intégré dans l'unité de traitement pour remplir l'ensemble des fonctions et leur coordination. Le réglage de calibre de chaque départ s'opère par ajustement du seuil de déclenchement surcharges de l'appareil divisionnaire correspondant. Tous les autres réglages (seuil de déclenchement différentiel, temporisation, etc...) s'effectuent également au niveau de l'unité de traitement centralisée.

L'appareil général est constitué d'un disjoncteur comprenant un mécanisme d'ouverture et de fermeture coopérant avec le déclencheur électromagnétique et un relais de commande raccordé à l'une des sorties internes. Après ouverture instantanée du disjoncteur, suite à un court-circuit, l'unité de traitement est programmée pour commander l'ouverture de l'appareil divisionnaire correspondant au circuit en défaut, suivie de la refermeture automatique du disjoncteur.

Selon un mode important de réalisation de l'invention, l'appareil général, les appareils divisionnaires et l'unité de traitement électronique sont incorporés dans un même bloc fonctionnel précâblé de distribution terminale ou domestique.

D'autres avantages et caractéristiques ressortiront plus clairement de la description qui va suivre de différents modes de mise en œuvre de l'invention, donnés à titre d'exemples non limitatifs et représentés aux dessins annexés dans lesquels:

— la figure 1 est une vue schématique d'un bloc fonctionnel selon l'invention;

— la figure 2 est une vue analogue à celle de la figure 1 illustrant une variante de réalisation;

— la figure 3 montre un schéma monophasé fonctionnel d'une variante de réalisation d'une installation de distribution automatisée selon l'invention;

— les figures 4 et 5 représentent en élévation et en profil un bloc de distribution selon le schéma de la figure 3.

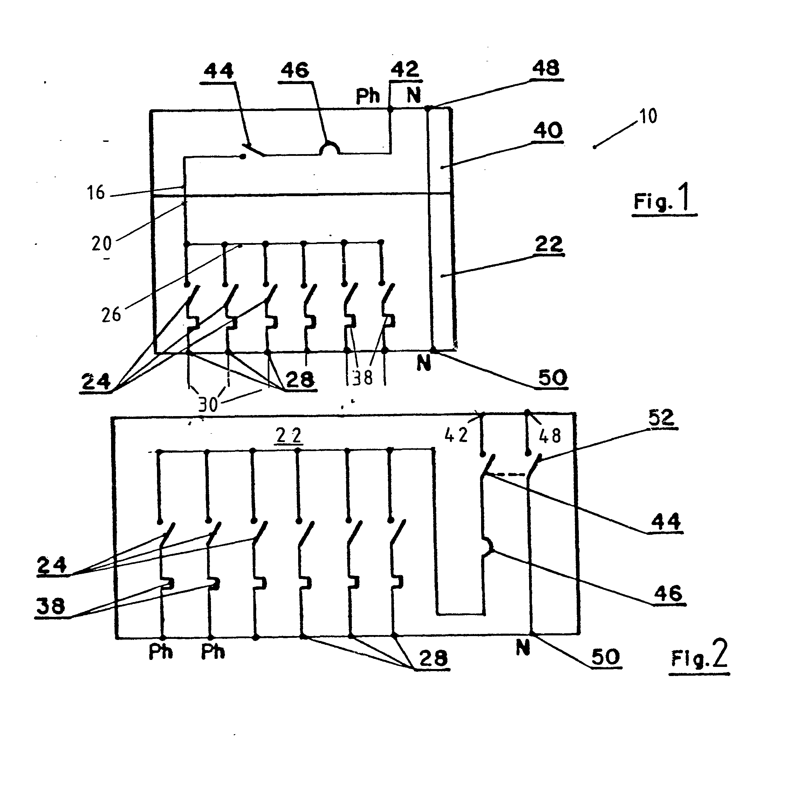

Sur la figure 1, un tableau d'abonné 10 d'une installation électrique basse tension comprend un appareil général de protection 44 qui peut faire office de disjoncteur de branchement alimenté par les bornes 42, 48. La borne de sortie de phase 16 de l'appareil général 44 est reliée à l'entrée 20 d'un bloc fonctionnel de départ 22. Dans le bloc fonctionnel 22, sont logés six appareils divisionnaires, notamment six disjoncteurs divisionnaires de départ 24 alimentés en parallèle par un conducteur de répartition 26 relié à la borne d'entrée 20 du bloc 22. Le bloc fonctionnel 22 comporte six bornes de départ 28 correspondant respectivement aux bornes de sortie des disjoncteurs divisionnaires 24, chaque borne 28 étant susceptible de recevoir un câble de départ 30. L'appareil général 44 est agencé en forme de bloc 40, accolé et assujetti au bloc fonctionnel de départ 22 et il comporte des contacts de phase 44 pilotés par un déclencheur magnétique 46, qui assure la protection contre les court-circuits en provoquant l'ouverture du disjoncteur, par exemple, en moins de 10 ms, pour tout courant supérieur à 10 In, In étant la puissance souscrite par exemple de 45 Ampères.

Chaque disjoncteur divisionnaire de départ 24 comporte un déclencheur de protection thermique 38, par exemple constitué par une bilame à chauffage direct, qui provoque le déclenchement du disjoncteur correspondant lors d'une surcharge pour protéger le départ correspondant. A titre d'exemple, on admettra que les six départs 30 ont un même calibre de 10 Ampères chacun, mais il est clair que ce calibre pourrait être différent, par exemple de 16 ou 20 Ampères, ou que certains départs ont un calibre supérieur à celui des autres. Les disjoncteurs divisionnaires 24 sont démunis d'une protection contre les court-circuits, qui est assurée par l'appareil général 44, de la manière décrite ci-dessous. Ce report de la fonction de protection instantanée sur l'appareil général 44 est obtenu par le respect des règles suivantes de coordination entre les disjoncteurs divisionnaires de départ 24 et l'appareil général 44.

Chaque disjoncteur divisionnaire 24 a une tenue électrodynamique des contacts suffisante pour éviter toute répulsion lors d'un court-circuit coupé par l'appareil général 44. Dans le cas envisagé d'une installation de distribution domestique, la puissance maximale de court-circuit est généralement de 1500 Ampères. La plus grande crête possible du courant est d'environ 2200 Ampères et les contacts du disjoncteur divisionnaire 24 sont agencés pour rester en posisiton fermée pour une valeur du courant coupé par l'appareil général 44 de 2200 Ampères. Cette tenue électrodynamique peut être obtenue par une pression de contact appropriée et/ou par une géométrie des contacts limitant les effets de répulsion électrodynamique. Un tel agencement des contacts est réalisable du fait du pouvoir de coupure limité du disjoncteur divisionnaire 24, les courants de court-circuits étant pris en charge par l'appareil général 44. Le déclencheur thermique du disjoncteur divisionnaire 24 doit, d'autre part, protéger le disjoncteur divisionnaire jusqu'à l'intervention du déclencheur instantané de l'appareil général 44. Dans l'exemple de réalisation envisagé, le seuil de déclenchement instantané de l'appareil général 44 est de 450 Ampères et la bilame du disjoncteur divisionnaire 24 assure l'auto-protection de cet appareil jusqu'à des courants supérieurs à ces 450 Ampères. La bilame du disjoncteur divisionnaire 24 ne doit pas être détruite par la contrainte thermique maximale correspondant à la coupure du court-circuit maximal de 1500 Ampères. Dans l'hypothèse retenue d'une coupure en moins de 10 ms d'un court-circuit par l'appareil général 44, cette contrainte thermique est inférieure à $2,25 \times 10^4 A^2 s$.

L'installation selon la figure 1 fonctionne de la manière suivante:

A un instant donné, le courant parcourt, par exemple, le contact de phase 44 et le déclencheur magnétique 46 de l'appareil général 44 pour sortir par la borne de phase 16 et parcourir le conducteur 16, un ou plusieurs disjoncteurs divisionnaires de départ 24, les câbles de départ, la charge (non représentée) alimentée par les départs 30 pour revenir par le ou les conducteurs de neutre. Chaque disjoncteur divisionnaire comporte de la manière usuelle une manette d'ouverture et de fermeture manuelle du disjoncteur pour interrompre ou fermer l'alimentation d'une charge raccordée du conducteur de départ associé 30. En fonctionnement normal, l'appareil général 44 et les disjoncteurs divisionnaires 24 sont fermés. Lors d'une surcharge intervenant sur l'un des départs 30, le déclencheur thermique 38 correspondant provoque l'ouverture du disjoncteur 24 pour interrompre l'alimentation de ce départ 30 en surcharge. L'appareil général 44 reste en position fermée d'alimentation des autres départs. La position de la manette du disjoncteur divisionnaire 24 déclenché permet une indication du circuit de départ en surcharge et une réalimentation de ce circuit par simple fermeture du disjoncteur correspondant 24.

Lors d'un court-circuit intervenant sur l'un quelconque des départs 30, le déclencheur instantané de l'appareil général 44 provoque le déclenchement de ce dernier et la coupure du courant de court-circuit. L'alimentation de toute l'installation est bien entendu interrompue et une intervention est indispensable pour la remise en service. Le disjoncteur divisionnaire 24 est protégé par l'appareil général 44 en amont et il n'est pas endommagé par ce courant de court-circuit ainsi que le câble 30.

Chaque disjoncteur divisionnaire 24 est avantageusement du type à coupure visible ou répondant aux règles de sectionnement, c'est-à-dire que la cinématique du mécanisme de commande du disjoncteur empêche la venue en position ouverte de la manette de commande tant que les contacts ne sont pas effectivement en position ouverte. On évite ainsi le risque d'intervention sur un circuit sous tension. Le disjoncteur divisionnaire 24 est d'un type simplifié puisqu'il ne comporte pas de déclencheur magnétique et que son pouvoir de coupure est notablement réduit. La chambre de coupure peut être inexistante ou présenter un pouvoir de coupure très limité et les contacts peuvent être démunis de pastilles. Le profil du bloc fonctionnel 22 correspond avantageusement au profil modulaire du système commercialement dénommé MULTI 9, et présente un dispositif de fixation par encliquetage sur un rail DIN. Il est clair que l'appareil général 44 peut être conçu pour une fixation ou un encliquetage direct sur le bloc fonctionnel 22, la liaison électrique entre les deux éléments pouvant s'effectuer automatiquement lors de l'encliquetage.

Le seuil de déclenchement instantané de l'appareil général 44 est notablement supérieur à la somme des courants nominaux des six départs 30. Dans l'exemple retenu, le seuil de déclenchement instantané est de 450 Ampères, alors que la somme des courants nominaux était de 60 Ampères. Cette différence notable impose des contraintes importantes au disjoncteur divisionnaire de départ 24 dont il est possible de s'affranchir en plaçant en série avec l'appareil général 44 un disjoncteur général de caractéristiques appropriées. Le seuil de déclenchement instantané de ce disjoncteur général est alors choisi du même ordre de grandeur que la somme des courants nominaux des départs 30, de manière à éviter un déclenchement intempestif lors d'une alimentation à pleine charge de tous les départs 30. Le disjoncteur simplifié doit, bien entendu, être utilisé uniquement dans une installation du type précité et il convient de le rendre inutilisable dans un autre contexte. Les blocs 22, 40, comprennent également un circuit de neutre se limitant à une borne d'entrée 48 reliée directement à une borne de sortie 50, ce circuit de neutre pouvant être externe aux blocs 22, 40. Les calibres et caractéristiques des appareils 24, 44, sont déterminés en usine et l'utilisateur n'aurait qu'à raccorder les câbles d'arrivée et de départ respectivement aux bornes 42, 48 et 28, 50. Il est clair que le circuit de neutre peut également comprendre des contacts d'ouverture associés, soit au contact de phase 44, soit au contact de phase des disjoncteurs divisionnaires 24. Les blocs 22, 40 peuvent être assemblés en usine ou livrés séparément avec un système de fixation et de raccordement rapide.

La figure 2 illustre une variante de réalisation dans laquelle l'appareil général est intégré dans le bloc fonctionnel 22. Les mêmes numéros de repère désignent sur cette figure les pièces identiques ou analogues à celles de la figure 1 et on reconnaît les bornes d'entrée 42, 48 de l'appareil principal à contact de phase 44 et à déclencheur magnétique 46, ainsi que les disjoncteurs divisionnaires 24. Le circuit de neutre est doté d'un contact d'interrupteur 52 couplé au contact de phase 44, mais il est clair que les variantes décrites en référence à la figure 1 d'un circuit de neutre dépourvu de contact de sectionnement ou extérieur au bloc 22 sont applicables. Dans cette version intégrée, toute erreur de montage ou de manœuvre est exclue. L'agencement interne des blocs peut, bien entendu, être différent de ceux représentés sur les figures et les déclencheurs magnétiques et thermique peuvent être d'un type différent.

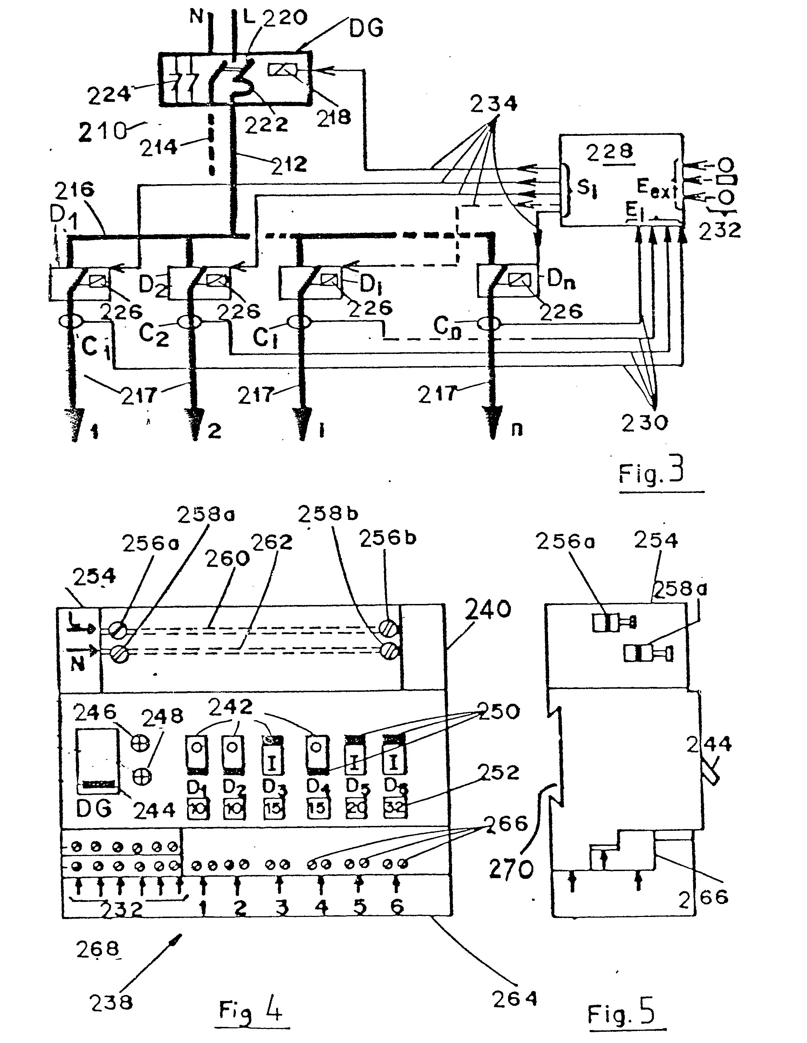

En référence aux figures 3 à 5, un tableau d'abonné ou de distribution 210 d'une installation électrique basse tension comporte un appareil général DG de protection et de commande, alimenté par un réseau de distribution à courant alternatif. Le circuit de l'installation est monophasé avec un conducteur de phase L et un conducteur de neutre N, mais il est évident que l'invention s'applique à un circuit triphasé avec ou sans distribution de neutre. La borne de sortie de phase de l'appareil général DG est connectée par un conducteur 212 de liaison à l'étage aval comprenant une pluralité de départs 1, 2... i, n en dérivation, équipée chacun d'un appareil divisionnaire de départ D1, D2... Di... Dn. La borne d'entrée de chaque appareil divisionnaire D1 à Dn est branchée à un conducteur de répartition 216 alimenté par le conducteur de liaison 212. La borne de sortie de chaque appareil divisionnaire D1 à Dn est susceptible de recevoir un câble 217 de départ pour la connexion d'un ou de plusieurs récepteurs. La borne de sortie du neutre de l'appareil général DG est branchée à une barrette de raccordement (non représentée) du neutre, à laquelle sont raccordés des conducteurs de neutre (non représentés) correspondant aux câbles de départs. L'appareil général DG est bipolaire, l'un des pôles servant à la coupure de la phase, et l'autre à celle du neutre. Tous les appareils divisionnaires $D_1$ à $D_n$ sont des modules unipolaires sans coupure du neutre, mais il est également possible selon une variante de prévoir des appareils divisionnaires bipolaires à coupure combinée de la phase et du neutre.

L'appareil général DG de commande et de protection peut être assimilé à un disjoncteur équipé d'une commande à distance à relais 218 d'ouverture et de fermeture coopérant avec le mécanisme pour l'actionnement des contacts 220 mobiles entre les positions ouvert et fermé. Un déclencheur électromagnétique 222 à action instantanée assure la protection contre les courants de court-circuit en provoquant le déclenchement rapide du disjoncteur lorsque l'intensité du courant de ligne dépasse le seuil de déclenchement instantané, fixé par exemple à 10 $I_n$, $I_n$ étant l'intensité du courant nominal correspondant à la puissance souscrite dans le cas d'un tableau d'abonné. L'appareil DG comporte de plus un système de contacts auxiliaires 224 destinés à signaler les positions ouvert et fermé das contacts 220 et l'état armé ou déclenché du mécanisme. Une commande locale à manette est associée au mécanisme de l'appareil DG pour assurer la commande manuelle de fermeture et d'ouverture, ainsi que le réarmement du mécanisme après déclenchement sur défaut.

Chaque appareil divisionnaire $D_1$ à $D_n$ est constitué par un interrupteur ou un disjoncteur télécommandé dont le mécanisme comporte un relais de commande 226 susceptible d'effectuer un nombre élevé de manœuvre de fermeture et d'ouverture. A l'aval de chaque interrupteur, est disposé un capteur de courant $C_1$ à $C_n$ destiné à mesurer l'intensité du courant traversant le départ correspondant. Chaque appareil divisionnaire $D_1$ à $D_n$ présente une tenue électrodynamique pour éviter toute répulsion des contacts lors d'un court-circuit limité ou coupé par l'appareil général DG. Un dispositif de signalisation (non représenté) de la position ouvert ou fermé peut être intégré dans chaque appareil divisionnaire $D_1$ à $D_n$.

Les capteurs de courant $C_1$ à $C_n$ peuvent être de type magnétique, notamment des transformateurs d'intensité à noyau magnétique de forme torique traversé par le câble 217 du départ 1 à n correspondant, et à enroulement secondaire de mesure du courant. Des capteurs additionnels (non représentés) peuvent être associés à chaque départ selon les besoins de protection, notamment un capteur de présence de tension, un capteur homopolaire d'un déclencheur différentiel résiduel, un détecteur de mise à terre du neutre... Les appareils divisionnaires $D_1$ à $D_n$ sont dépourvus de tout déclencheur thermique et électromagnétique.

Une unité de traitement 228 électronique à microprocesseur est susceptible de commander l'ouverture et la fermeture de l'appareil général DG et des appareils divisionnaires $D_1$ à $D_n$, en fonction du programme choisi et des différents signaux délivrés par l'ensemble des capteurs et par des organes 232 de commande extérieure. L'unité électronique 228 est concue pour permettre une programmation, ou peut être reliée à un dispositif du type automate programmable.

L'unité 228 comporte:

– une première série d'entrées internes $E_i$ auxquelles sont raccordés par des conducteurs de liaison 230 les enroulements secondaires des capteurs de courant $C_1$ à $C_n$ et les capteurs additionnels (présence de tension, protection différentielle, neutre à la terre), des différents départs 1 à n, ainsi que les contacts auxiliaires 224 de signalisation à distance de l'état de l'appareil général DG et les contacts auxiliaires éventuels des appareils divisionnaires $D_1$ à $D_n$;

– une deuxième série d'entrées externes $D_{ext}$ pour le raccordement d'organes 232 de commande extérieure, notamment des thermostats, interrupteurs crépusculaires, programmateurs ou séquenceurs électromécaniques et boutons poussoirs manuels susceptibles d'assurer la commande à distance des appareils divisionnaires $D_1$ à $D_n$ des différents départs 1 à n;

– des sorties $S_i$ internes pour la connexion de conducteurs 234 d'alimentation des relais 218, 226 de commande de l'appareil général DG et des appareils divisionnaires $D_1$ à $D_n$;

– un interface «utilisateur» destiné à l'établissement, au contrôle et aux modifications du programme, et à la visualisation des données nécessaires à l'exploitation locale;

– et un interface «système général» pour l'interconnexion de l'unité de traitement 228 à un ordinateur général ou à un système de pilotage à distance.

L'unité électronique 228 centralise les données en provenance des capteurs, des dispositifs de signalisation à contacts auxiliaires, et des organes 232 de commande extérieure, et délivre après traitement un signal de commande destiné à l'un des relais 218, 226. Le traitement dépend du programme affiché dans l'unité 228, et le signal de commande à l'une des sorties $S_i$ interne est soit un ordre d'ouverture sur défaut, soit un ordre de commande à distance d'ouverture et de fermeture, soit un ordre retardé de refermeture après ouverture sur défaut. Le réglage de calibres de différents départs 1 à n est intégré dans l'unité 228 pour ajuster le seuil de déclenchement surcharge de chaque appareil divisionnaire $D_1$ à $D_n$. L'unité 228 peut comporter également des moyens de réglage du seuil de déclenchement différentiel de la protection de défaut à la terre de chaque départ.

La protection contre les court-circuits est assurée par l'intervention instantanée du déclencheur électromagnétique 222 et l'appareil général DG. Le pouvoir de coupure des appareils divisionnaires $D_1$ à $D_n$ peut être faible. L'unité 228 de traitement peut provoquer ultérieurement l'ouverture de l'appareil divisionnaire protégeant le départ en défaut, puis la refermeture automatique de l'appareil général DG.

Les fonctions de protection sur défaut et de commande à distance sont mises en œuvre de façon coordonnée sans duplication d'organes, la protection contre les court-circuits étant assurée par l'appareil général DG de tête, et les protections complémentaires (surcharges, courant différentiel résiduel, surtension et autres) étant prises en compte par les appareils divisionnaires $D_i$ à $D_n$ commandés à la fois par les capteurs des circuits électroniques internes et les organes 232 de commande extérieurs.

Le fonctionnement du tableau de distribution 210 de la figure 3 est le suivant:

Commande manuelle et à distance

L'ensemble étant raccordé sous tension, le disjoncteur général DG étant armé et fermé, l'ouverture et la fermeture de chaque départ 1 à n est obtenu soit par commande locale, soit par commande à distance pilotée par les organes de commande extérieure 232 coopérant avec l'unité de traitement 228. Cette dernière transforme l'information extérieure en ordre d'ouverture ou de fermeture d'un appareil divisionnaire prédéterminé, par alimentation du relais 226 associé.

Protection surcharges

En cas de surcharge sur le départ 1, détectée par le capteur de courant $C_i$, l'unité de traitement 228 enregistre le dépassement du calibre correspondant au seuil de déclenchement et envoie un ordre d'ouverture au relais 226 de l'appareil divisionnaire $D_i$. Ce dernier reste ouvert et l'unité 228 interdit sa refermeture automatique pendant un temps donné.

Protection court-circuits

En présence d'un court-circuit sur le départ 2, le disjoncteur DG déclenche de façon réflexe et limite à une faible valeur d'énergie dissipée dans le circuit en défaut. L'unité de traitement 228 délivre avec un faible retard un ordre d'ouverture au relais 226 de l'appareil divisionnaire $D_2$ correspondant au circuit en défaut. Les moyens de programmation de l'unité de traitement 228 électronique permettent de commander la refermeture immédiate du disjoncteur DG de tête tout en interdisant celle de l'appareil divisionnaire $D_2$. On assure ainsi de façon optimale la continuité de service sur les circuits non défectueux. De plus, comme la plupart des court-circuits sont d'origine fugitive, il est possible, lorsque la continuité de service est très importante, de programmer un essai de refermeture de l'appareil divisionnaire $D_2$ avant sa condamnation définitive.

Protection différentielle

En cas de défaut à la terre sur le départ 1, détecté par le capteur homopolaire associé, l'unité de traitement 228 contrôle le dépassement du seuil de déclenchement différentiel et envoie un ordre d'ouverture au relais 226 de l'appareil $D_1$.

On remarque que la centralisation et le traitement des informations internes et externes dans l'unité 228 permettent pour chaque départ 1 à n de transmettre indifféremment l'ordre d'ouverture sur défaut, l'ordre de refermeture après défaut et l'ordre de commande à distance, par le ou les mêmes conducteurs 234 de sorties $S_i$ et d'utiliser le même relais 226 de l'appareil divisionnaire $D_1$ à $D_n$ correspondant.

Les figures 4 et 5 illustrent un mode de réalisation de l'invention, équipé d'une unité de traitement 228 simplifiée, destinée à assurer les protections les plus courantes, notamment contre les court-circuits et les surcharges, chacun des six départs étant manœuvré à distance par un organe de commande extérieur 232. Cette version simplifiée de l'invention est particulièrement adaptée aux circuits d'éclairage et de chauffage des bâtiments, et est agencé sous la forme d'un bloc fonctionnel de distribution 238 d'encombrement réduit et précâblé en usine. Le bloc de distribution 238 à six départs 1 à 6 comporte un coffret 240 isolant renfermant l'appareil général DG et l'ensemble des appareils divisionnaires $D_1$ à $D_6$. La face avant du coffret est dotée d'une pluralité d'ouvertures 242 pour le passage des manettes de commande locale. La manette 244 principale assure la commande manuelle de fermeture et d'ouverture de l'appareil général DG, ainsi que le réarmement de ce dernier après déclenchement sur défaut. A l'appareil général DG sont associés deux témoins 246, 248 de présence de tension et de signalisation de déclenchement sur défaut. Les manettes 250 servent de commande locale et d'indication de la position des contacts des appareils divisionnaires $D_1$ à $D_6$ (position ouvert représentée par O, et position fermé par I). Des fenêtres 252 de visualisation du réglage de calibre des six départs sont prévues sous les manettes 250 des appareils divisionnaires $D_1$ à $D_6$ correspondants. Les différents calibres 10A, 15A, 20A et 32A indiquent le seuil de déclenchement de chaque départ lors de l'apparition d'une surcharge.

Un cache borne 254 supérieur protège le raccordement du bloc de distribution 238 à la source de courant laquelle est constituée par le réseau de distribution dont les conducteurs L et N sont connectées à des bornes d'arrivée 256a, 258a. Un jeu de barres 260, 262 conductrices s'étend horizontalement sous le cache borne 254 pour assurer la liaison des bornes d'arrivée 256a, 258a avec des bornes auxiliaires opposées 256b, 258b. L'agencement des paires de bornes 256a, 258a; 256b, 258b aux extrémités opposées des barres 260, 262 autorise l'assemblage latéral modulaire du bloc 238 avec d'autres blocs identiques pour augmenter le nombre de départs desservis à partir d'une même arrivée de courant.

Un cache borne 264 inférieur recouvre les bornes de départs 266 phase et neutre vers les utilisations. Les organes 232 de commande à distance (thermostats, séquenceurs, boutons poussoirs, etc...) sont connectés à des bornes d'entrée 68 en liaison électrique avec la deuxième série d'entrées externes $E_{ext}$ de l'unité de traitement 228. Le bloc de distribution 238 est doté d'un socle de fixation 270 susceptibles d'être encliqueté sur un rail support. La fixation du bloc 238 peut également s'effectuer par vis sur une surface d'appui plane, notamment un mur ou une platine support.

Le bloc de distribution 238 est entièrement précâblé en usine et comporte les connexions internes suivantes:

– conducteurs principaux entre le jeu de barres 260, 262 et l'appareil général DG;

– conducteur de répartition 216 relié à l'appareil DG par le conducteur de liaison 212;

– capteurs de courants $C_1$ à $C_6$ branchés à l'unité de traitement 228 par les conducteurs 230;

– conducteurs 234 agencés entre l'unité 228 centralisée et les relais 218, 226 des appareils général DG et divisionnaires $D_1$ à $D_6$.

La mise en service du bloc de distribution 238 par l'installateur nécessite un simple raccordement des câbles 217 de départs 1 à 6 aux bornes 266, des organes 232 de commande extérieure aux bornes 268 et des conducteurs L et N d'alimentation aux bornes d'arrivée 256a, 258a. Le choix d'un départ dépend du calibre affiché dans les fenêtres de visualisation 252.

**Revendications**

1. Installation électrique de distribution terminale ayant plusieurs départs (30; 217) alimentés par une arrivée commune, chaque départ étant protégé par un appareil divisionnaire (24, D1–Dn) de coupure de courant de départ, l'arrivée commune comportant un appareil général de protection (44; 44, 52; DG) ayant un dispositif de protection (46; 222) contre les courts-circuits, chacun desdits appareils ayant une commande manuelle, caractérisée en ce que l'appareil général (44; 44, 52, DG) et les appareils divisionnaires (24; D1–Dn) sont incorporés dans un même bloc fonctionnel (22; 238) de départ contenant les conducteurs de raccordement entre les appareils divisionnaires et l'appareil général, chaque appareil divisionnaire ayant uniquement un dispositif de protection (38; C1–Cn) contre les surcharges et l'appareil général ayant uniquement un dispositif de protection (46; 222) contre les court-circuits dont le seuil peut être limité à une valeur voisine de la protection contre les courts-circuits de l'appareil divisionnaire (24; D1–Dn) et du départ (217) associé étant assurée par l'appareil général (44; 52; DG) en prévoyant une coordination entre l'appareil général et les appareils divisionnaires afin que, d'une part, les appareils divisionnaires aient une tenue électrodynamique et une tenue thermique compatibles avec le courant maximal de court-circuit limité par l'appareil général et que, d'autre part, la limite d'autoprotection du dispositif de protection (38; C1–Cn) contre les surcharges de l'appareil divisionnaire (24; D1–Dn) soit au moins égale au seuil d'intervention du dispositif de protection (46; 222) contre les courts-circuits de l'appareil général (44; 44, 52; DG).

2. Installation électrique selon la revendication 1, caractérisée en ce que chaque appareil divisionnaire (D1–Dn) comprend un relais de commande d'ouverture et de fermeture et au moins un capteur de courant agencé à la sortie de l'appareil divisionnaire (D1–Dn) pour détecter un défaut sur le départ correspondant, que l'appareil général (DG) est doté d'un déclencheur électromagnétique (222) à action instantanée, et qu'une unité de traitement (228) électronique centralise les informations en provenance des capteurs de courant et d'organes (232) de commande extérieurs pour délivrer après traitement un ordre d'intervention du relais (226) de commande de l'appareil divisionnaire (D1–Dn) d'un départ prédéterminé, cet ordre étant soit un signal de déclenchement après apparition d'un défaut détecté par le capteur correspondant, soit un signal de commande à distance piloté par les organes (232) extérieurs pour l'ouverture ou la fermeture dudit départ, l'ensemble étant agencé pour assurer une coordination entre les fonctions de protection et de commande, la protection contre les courts-circuits étant assurée par le seul appareil général (DG), les protections complémentaires contre les surcharges, courant différentiel résiduel et autres étant pris en compte par les appareils divisionnaires (D1–Dn), commandés à la fois par les circuits électroniques internes et les organes (232) de commande extérieurs.

3. Installation électrique selon la revendication 2, caractérisée par le fait que l'unité de traitement (228) comprend une première série d'entrées (Ei) internes pour le raccordement des capteurs et de contacts auxiliaires de signalisation de l'état de l'appareil général (DG) et éventuellement des appareils divisionnaires (D1 à Dn), une deuxième série d'entrées (E ext.) externes pour la connexion des organes (232) de commande extérieurs, et une pluralité de sorties (S1) internes pour le raccordement des relais de commande (226) des différents appareils divisionnaires (D1 à Dn).

4. Installation électrique selon la revendication 2 ou 3, caractérisée par le fait que l'appareil général (DG) est un disjoncteur ayant un déclencheur électromagnétique (222) et un relais de commande (218) raccordé à l'une des sorties (Si) internes, et qu'après ouverture instantanée du disjoncteur suite à un court-circuit, l'unité de traitement (228) est programmée pour commander l'ouverture de l'appareil divisionnaire correspondant au circuit en défaut, suivie de la refermeture automatique du disjoncteur.

5. Installation électrique selon la revendication 2, 3 ou 4, caractérisée en ce que l'unité de traitement (228) est incorporée dans le bloc fonctionnel (238).

**Claims**

1. Electrical equipment for terminal distribution having a plurality of output conductors (30; 217), supplied by a common input conductor, each output conductor being protected by a branch current-breaking apparatus (24; D1–Dn), said common input conductor comprising a main protection apparatus (44; 44, 52; DG) having a protection device (46; 222) against short-circuits, each of said apparatus being manually controlled, characterized in that said main protection apparatus (44; 44, 52; DG) and branch apparatus (24; D1–Dn) are incorporated in the same output functional assembly (22; 238) containing the connection conductors between a branch apparatus and main apparatus, each branch apparatus having only a protection device (38; C1–Cn against overloads and said main apparatus having only a protection device (46; 222) against short-circuits, the threshold of which can be limited to a value, approaching the sum of the rated currents of branch apparatus, the protection against short-circuits of said branch apparatus (24; D1–Dn) and associated output (217) being secured by said main apparatus (44; 44, 52; DG), foreseeing a co-ordination between main apparatus and branch apparatus, in order that, on one hand, a branch apparatus has an electrodynamic and thermal level compatible with maximum short-circuit current limited by main apparatus and that, on the other hand, the auto-protection limit of the protection device (38; C1–Cn) against overloads of branch apparatus (24; D1–Dn) is at least equal to the intervention threshold of protection device (46; 222) against short-circuits of main apparatus (44; 44; 52; DG).

2. Electrical equipment according to claim 1, characterized in that each branch apparatus (D1–Dn) comprises a control relay for opening and closing, and at least a current sensor, fitted up at the output of branch apparatus (D1–Dn) to detect a fault on the corresponding output, that main apparatus (DG) is equipped with an instantaneous electromagnetic release (222), and that an electronic treatment unit (228) centralizes the informations coming from current sensors and external actuators (232) to deliver, after treatment, an intervention order to the control relay of branch apparatus (D1–Dn) from a predetermined output, this order being either a tripping signal after a fault detected by the corresponding sensor has appeared, or a remote-control signal, controlled by external actuators (232) for opening or closing of said output, the assembly being fitted up to ensure a co-ordination between protection and controlling functions, protection against short-circuits being ensured by main apparatus only (DG), complementary protections against overloads, residual current and others being supported by a branch apparatus (D1–Dn), controlled both by internal electronic circuits and external actuators (232).

3. Electrical device according to claim 2, characterized in that the treatment unit (228) comprises a first series of internal inputs (Ei) for the connexion of the sensors and auxiliary contacts signalling the condition of main apparatus (DG) and eventually the condition of branch apparatus (D1 to Dn), a second series (E ext.) of external inputs for the connexion of external actuators and a plurality of internal inputs (S1) for the connexion of control relays (226) of the different branch apparatus (D1 to Dn).

4. Electrical equipment according to claim 2 or 3, characterized in that main apparatus (DG) is a circuit-breaker having an electromagnetic release (222) and a control relay (218) connected to one of the internal inputs (Si) and that after an instantaneous opening of the circuit-breaker, following a short-circuit, the treatment unit (228) is programmed to control the opening of the branch apparatus corresponding to the fault circuit, followed by the automatic re-closing of the circuit-breaker.

5. Electrical equipment according to claim 2, 3 or 4, characterized in that the treatment unit (228) is incorporated in the functional assembly (238).

**Patentansprüche**

1. Elektrische Energieverteilungsanlage mit mehreren Ausgängen (30; 217), die von einer gemeinsamen Eingangsspeisung versorgt werden, wobei jeder Ausgang von einem Teilgerät (24; D1–Dn) zur Ausgangsstrom-Unterbrechung geschützt wird, und wobei die gemeinsame Eingangsspeisung ein allgemeines Schutzgerät (44; 44, 52; DG) aufweist mit einer Schutzvorrichtung (46; 222) gegen Kurzschlüsse, und wobei jedes der genannten Geräte eine Handsteuerung besitzt, dadurch gekennzeichnet, dass das allgemeine Gerät (44; 44, 52, DG) und die Teilgeräte (24; D1–Dn) in demselben funktionellen Ausgangsblock (22; 238) eingebaut sind, der die Anschlussleiter zwischen den Teilgeräten und dem allgemeinen Gerät aufweist, wobei jedes Teilgerät nur eine Schutzvorrichtung (38; C1–Cn) gegen die Überlasten besitzt und wobei das allgemeine Gerät nur eine Schutzvorrichtung (46; 222) gegen Kurzschlüsse besitzt, dessen Schwelle auf einen Wert begrenzt sein kann, der nahe dem Summenwert der Nennströme der Teilgeräte liegt, wobei der Schutz gegen die Kurzschlüsse des Teilgerätes (24; D1–Dn) und des dazugehörenden Ausgangs (217) durch das allgemeine Gerät (44; 44, 52; DG) gewährleistet wird, indem eine Koordination zwischen dem allgemeinen Gerät und den Teilgeräten vorgesehen ist, damit einerseits die Teilgeräte ein elektro-dynamisches und ein thermisches Verhalten besitzen, die mit dem von dem allgemeinen Gerät begrenzten Kurzschluss-Maximalstrom verträglich sind, und damit andererseits die Selbstschutzgrenze der Schutzvorrichtung (38; C1–Cn) gegen die Überlasten des Teilgerätes (24; D1–Dn) wenigstens der Einsatzschwelle der Schutzvorrichtung (46; 222) gegen die Kurzschlüsse des allgemeinen Gerätes (44; 44, 52; DG) entspricht.

2. Elektrische Anlage gemäss Anspruch 1, dadurch gekennzeichnet, dass jedes Teilgerät (D1–Dn) ein Öffnungs- und Schliess-Steuerungsrelais aufweist und wenigstens einen Stromfühler, der am Ausgang des Teilgerätes (D1–Dn) angebracht ist, um einen Fehler in dem entsprechenden Ausgang zu detektieren, und dass das allgemeine Gerät (DG) mit einem elektromagnetischen Sofort-Auslöser (222) versehen ist, und dass eine elektronische Verarbeitungs-Einheit (228) die Informationen von den Stromfühlern und äusseren Steuerorganen (232) zentralisiert, um nach der Verarbeitung einen Einsatzbefehl an das Steuerrelais (226) des Teilgerätes (D1–Dn) eines vorbestimmten Ausgangs abzugeben, wobei dieser Befehl entweder ein Auslösesignal nach Auftreten eines von dem entsprechenden Fühler detektierten Fehlers ist, oder ein von den äusseren Organen (232) ferngesteuertes Steuersignal zum Öffnen oder Schliessen des genannten Ausgangs, wobei das Ganze so ausgeführt ist, um eine Koordination zwischen den Schutz- und Steuerfunktionen zu gewährleisten, und wobei der Schutz gegen Kurzschlüsse ganz allein von dem allgemeinen Gerät (DG) gewährleistet wird, während der zusätzliche Schutz gegen Überlasten, Differential-Reststrom und anderes von den Teilgeräten (D1–Dn) übernommen wird, die gleichzeitig von den internen elektronischen Stromkreisen und den äusseren Steuerorganen (232) gesteuert werden.

3. Elektrische Anlage gemäss Anspruch 2, dadurch gekennzeichnet, dass die Verarbeitungs-Einheit (228) eine erste Serie von internen Eingängen (Ei) besitzt für den Anschluss der Fühler und Hilfskontakte zur Anzeige des Zustandes des allgemeinen Gerätes (DG) und eventuell der Teilgeräte (D1–Dn), und eine zweite Serie von äusseren Eingängen (Eext.) für die Verbindung der äusseren Steuerorgane (232), und eine Mehrzahl von internen Ausgängen (S1) für den Anschluss der Steuerrelais (226) der verschiedenen Teilgeräte (D1–Dn).

4. Elektrische Anlage gemäss Anspruch 2 oder 3, dadurch gekennzeichnet, dass das allgemeine Gerät (DG) ein Schalter ist mit einen elektromagnetischen Auslöser (222) und mit einem Steuerrelais (218), das mit einem der internen Ausgänge Si) verbunden ist, und dass nach der sofortigen Öffnung des Schalters bei Kurzschluss die Verarbeitungs-Einheit (228) so programmiert ist, um die Öffnung des dem fehlerhaften Kreis entsprechenden Teilgerätes zu steuern, gefolgt von der automatischen Wiederschliessung des Schalters.

5. Elektrische Anlage gemäss Anspruch 2, 3 oder 4, dadurch gekennzeichnet, dass die Verarbeitungs-Einheit (228) in dem funktionellen Block (238) eingebaut ist.

**Fig.1**

**Fig.2**

Fig. 3

Fig. 4

Fig. 5